Europäisches Patentamt

European Patent Office

Office européen des brevets

(19)

(11) Numéro de publication : **0 604 291 A1**

(12) **DEMANDE DE BREVET EUROPEEN**

(21) Numéro de dépôt : **93403094.1**

(22) Date de dépôt : **17.12.93**

(51) Int. Cl.⁵ : **G06F 15/68**

(30) Priorité : **24.12.92 FR 9215721**

(43) Date de publication de la demande :
**29.06.94 Bulletin 94/26**

(84) Etats contractants désignés :
**AT BE DE ES GB IT NL**

(71) Demandeur : **SOPHA MEDICAL**
**41, rue Fourny**
**F-78534 BUC Cedex (FR)**

(72) Inventeur : **Bourguignon, Michel**
**Cabinet Ballot-Schmit,**
**7 rue Le Sueur**
**F-75116 Paris (FR)**
Inventeur : **Berrah, Hafida**
**Cabinet Ballot-Schmit,**
**7 rue Le Sueur**
**F-75116 Paris (FR)**
Inventeur : **Thöl, Christoph**
**Cabinet Ballot-Schmit,**
**7 rue Le Sueur**
**F-75116 Paris (FR)**

(74) Mandataire : **Schmit, Christian Norbert Marie**
**et al**
**Cabinet Ballot-Schmit**
**7, rue Le Sueur**
**F-75116 Paris (FR)**

(54) **Procédé de traitement des images d'un lot d'images.**

(57)    On élimine le bruit dans les images en effectuant une première transformée (11) de Fourier des images d'un lot d'images (I) originelles. On décompose ensuite chacune de ces images transformées (R,J) en série de Fourier (A, PHI, B, PSI) pour mettre en évidence les harmoniques principaux (M) d'une évolution périodique des images originelles et des images transformées. A partir de cette décomposition harmonique on recompose (14, 15) des images transformées (RH, JH) qui sont ainsi filtrées par abandon des harmonique non utiles. A partir des images transformées filtrées on effectue (16) une transformée de Fourier inverse pour obtenir en définitive des images originelles filtrées (F). On montre que le filtrage dans ce cas enlève le bruit sans altérer les structures de l'image, sans répartir le bruit parmi toutes ces structures.

FIG_2

EP 0 604 291 A1

La présente invention a pour objet un procédé de traitement des images d'un lot d'images, particulièrement d'un lot d'images obtenues au moyen d'une gamma caméra. L'invention peut cependant être appliquée à des images obtenues avec d'autres protocoles médicaux et, éventuellement, même obtenues par visualisation directe au moyen d'une caméra de type classique. Le traitement des images dans l'invention concerne de préférence le traitement des images numérisées c'est à dire dont les élément d'images, ou pixels, de résolution donnée dans l'image, sont affectés de signaux d'images évalués numériquement, la plupart du temps en mode binaire. L'invention concerne plus particulièrement les lots d'images relatifs à des phénomènes périodiques. Un phénomène périodique peut être un phénomène qui évolue dans le temps, comme par exemple les battements du coeur, ou il peut être un phénomène statique mais que l'on observe d'un point de vue qui périodiquement revient au même endroit.

Le problème essentiel que visent à résoudre les traitements d'images est celui de la suppression du bruit. Le bruit est particulièrement sensible dans l'acquisition des images scintigraphiques avec des gamma caméras. En effet le principe de ces appareils est de compter pour chaque pixel de l'image le nombre d'occurrences d'émissions radioactives provenant d'un endroit particulier dans un corps examiné et correspondant à ce pixel dans l'image. Le principe de ces appareils est décrit dans le brevet américain de ANGER n° 3.011.057. Dans le domaine de la surveillance cardiaque par gamma caméra, on a coutume de réaliser des images dont la résolution est de l'ordre de 64 x 64 pixels à 128 x 128 pixels. Pour chaque pixel on peut accumuler jusqu'à 32.000 occurrences ou coups. Le nombre des coups accumulés pour chaque endroit est directement proportionnel à la durée totale d'acquisition de l'image.

On peut montrer que l'influence du bruit dans une image scintigraphique est décroissante avec le nombre de coups comptés pour chaque pixel. Par exemple le rapport signal sur bruit évolue comme la racine carrée du nombre moyen de coups comptés. En contrepartie, cependant, un nombre de coups comptés trop grand amène à une image acquise trop lentement. Le problème se présente essentiellement pour les acquisitions de phénomènes périodiques, surtout relatives au fonctionnement du coeur, pour lesquelles on cherche à obtenir des images de cet organe à différents états de son mouvement. Par exemple, on a l'habitude de décomposer le mouvement du coeur (dont le battement est l'ordre de 1 seconde) en seize images successives relatives à chacun de ces états.

Les indications chiffrées données dans la présente description ne sont présentées que pour fixer les idées et ne peuvent en aucun cas conduire à restreindre le domaine de protection de l'invention à des valeurs comprises dans les plages indiquées.

Etant donné le caractère fugitif de chacun des seize états du coeur au cours de sa période et de la durée nécessaire pour acquérir une image de bonne qualité (en général 30 secondes), il est nécessaire de recourir à une technique de synchronisation au cours de laquelle on affecte les coups comptés, à un moment donné, à l'image de l'état du coeur correspondant à un état repéré temporellement par rapport à une date de synchronisation. On repère ainsi seize états et on compose, petit à petit, seize images en accumulant respectivement dans chacune de ces images les coups décomptés pendant les périodes correspondantes. Evidemment le problème est encore plus complexe si on veut obtenir des images avec une résolution de 128 x 128 pixels, et 32 images par cycle cardiaque. En général l'attaque de synchronisation correspond au début du cycle cardiaque, c'est à dire celle où le ventricule gauche est rempli.

Par ailleurs, même si on voulait accumuler des coups sur un grand nombre de cycles cardiaques, par exemple supérieur à 60 cycles (ce qui correspond à une minute), comme on en a l'habitude, cela ne pourrait conduire à des résultats satisfaisant étant donné que, pour le coeur, le rythme n'est pas constant mais est dépendant des conditions environnantes, par exemple l'effort. En outre les marqueurs utilisés et injectés dans le corps du patient pour créer l'image de scintigraphie peuvent être métabolisés par le corps humain, leur radioactivité diminue, et au bout d'un certain temps le nombre de coups comptables par période devient insuffisant.

Enfin un autre phénomène intervient qui est celui du choix du marqueur injecté dans le corps d'un patient. On choisit pour les applications cardiaques d'injecter généralement du Thallium dont la période de radioactivité est malheureusement de 73 heures; alors que du Technetium 99m qui est utilisé pour d'autres applications, mais qui est moins intéressant pour le coeur car il ne peut être utilisé seul, a une période de radioactivité plus courte de l'ordre de 6 heures. Le Thallium est préféré parce qu'il a l'avantage de bien se fixer dans les parois du coeur, et donc par la présence de ce marqueur dans les parois de bien révéler la position de ces parois. Malheureusement sa plus grande période de radioactivité impose, pour ne pas traumatiser le patient avec des doses radioactives trop importantes (proportionnelle à la durée de vie radioactive du marqueur), d'injecter moins de produit de radioactif. Ceci a encore pour résultat de diminuer le nombre de coups comptables.

Le résultat de toutes ces contraintes est l'obtention d'images avec peu de coups par pixel, donc fortement bruitées.

Un autres type d'examen présente le même type de problème. Il s'agit des tomographies. Dans celles-ci l'individu sous examen est censé être immobile et on fait tourner autour de lui le détecteur de la gamma caméra de manière à acquérir un certain nombre d'images, de vues, en général 64. Compte tenu de ce que l'acquisition d'une image est de l'ordre de 30 secondes, cela revient à laisser le patient sur la couche d'examen pendant environ une demi-heure. C'est dur d'obtenir que le patient reste rigoureusement immobile pendant cette durée. Le phénomène le plus gênant dans ce type d'examen est la métabolisation du marqueur et le fait que celui se porte dans les reins, dans un organe qu'on ne surveille en général pas. Le marquage utile décroît en conséquence. Aussi le nombre des coups comptés par images est finalement faible, et les images des vues sont également bruitées.

Pour résoudre les problèmes de bruit dans les images, il a été mis au point divers types de traitement, notamment en radiologie. Ces traitements ont en général pour but d'effectuer un filtrage spatial de l'image. Un tel filtrage a pour effet de modifier le signal d'image en un pixel de manière à le moyenner avec le signal d'image des pixels voisins. Ce type de filtrage, qui peut être tolérable lorsque la résolution est très grande (1024 x 1024 points) est difficilement acceptable quand celle-ci est faible comme c'est généralement le cas en scintigraphie. Dans tous les cas il s'exerce au détriment de la précision de l'image, de la résolution finale obtenue.

Un autre type de traitement est connu. Il consiste, pour chaque pixel, à considérer que le signal d'image en ce pixel évolue périodiquement comme le phénomène général qu'on étudie. Cette évolution périodique peut être décomposée en série de Fourier, fonction des harmoniques de la variation du phénomène étudié. En pratique on effectue une transformée de Fourier pour reconnaître l'amplitude et la phase de chacune des harmoniques du phénomène. On a pu montrer que pour un lot de seize images, correspondant à seize états du coeur, on n'obtenait pas de différence statistiquement sensible, mesurée avec un test du khi$^2$, entre les seize images bruitées obtenues directement et seize images qu'on peut réobtenir à partir des harmoniques de décomposition. Cette décomposition est du type:

FORMULE I

$$A(t) = A_0 + A_1\cos(2\pi f_1 t + Phi_1) + A_2\cos(4\pi f_1 t + Phi_2) + A_3\cos(6\pi f_1 t + Phi_3).$$

Dans cette formule A est la luminance d'un pixel, $f_1$ est la fréquence de battement du coeur, t est le temps. Pour obtenir les seize images il suffit de donner à t une valeur comprise entre 0 et 16 fois la valeur du seizième de la période égale à $1/f_1$. Il apparaît cependant que ce type de filtrage, qui supprime les harmoniques au delà du troisième, n'est pas un bon filtrage. En effet il supprime les bruits, l'image devient plus agréable à regarder, mais dans la pratique elle s'avère être fausse, et elle n'est plus révélatrice du phénomène qu'on étudie du fait de la suppression de ses hautes fréquences.

L'invention a pour objet de remédier à ces inconvénients en effectuant un traitement de filtrage appliqué, non plus sur les images obtenues directement par le protocole d'acquisition médical, ou autre, mais sur des transformations analytiques de ces images. Autrement dit on prend, pour simplifier, les seize images de départ. On en produit des transformées analytiques pour obtenir des images transformées comportant chacune une partie réelle et une partie imaginaire. On effectue le filtrage du bruit sur ces images transformées. De préférence le filtrage est du type du dernier évoqué ci-dessus. Cependant il pourrait en être autrement. Une fois ce filtrage effectué, on effectue une transformée analytique inverse pour revenir à des images de même type que les images de départ. Et on observe une amélioration notable de l'élimination du bruit.

La transformée analytique dont il est question est une transformée analytique spatiale qui, de préférence, est une transformée de Fourier, mais elle pourrait être également une transformée en Z, ou en tout autre mode de transformation. On observe alors une amélioration très nette, visible à l'oeil nu, du rapport signal/bruit des images présentées, sans incorporer le bruit dans l'image. En définitive, le fait de passer par une transformée analytique spatiale des images originelles, et de filtrer temporellement (c'est à dire essentiellement dans une autre dimension, celle du temps, que celle pour laquelle on effectue la transformée analytique spatiale) de chacune des composantes réelles et imaginaires permet de rechercher une cohérence qui n'est plus uniquement spatiale, ou uniquement temporelle, comme dans les cas vus ci-dessus mais qui est une combinaison spatio-temporelle de ces images. Le résultat est alors bien meilleur.

On peut perfectionner le filtrage proprement dit en ne limitant pas la décomposition en harmoniques temporelles des parties réelles et imaginaires brutalement au-delà d'une harmonique donnée, mais au contraire en amortissant des amplitudes des harmoniques supérieures à une harmonique de rang donné, par exemple $A_3$ (apodisation).

L'invention a donc pour objet un procédé de traitement des images d'un lot original de N images à au moins deux dimensions, pour en enlever le bruit, caractérisé en ce qu'il comporte les étapes suivantes:
- on effectue une transformée analytique bidimensionnelle des images du lot original pour obtenir un lot de N images transformées, chaque image transformée comportant une partie réelle et une partie imaginaire,

- on filtre les N images transformées en composant chaque point d'image de ces images transformées avec des mêmes points d'image dans les autres images transformées, afin d'obtenir un lot d'images transformées filtrées, et
- on effectue une transformée analytique bidimensionnelle inverse des images du lot d'images transformées filtrées pour obtenir un lot de N images originelles filtrées.

L'invention sera mieux comprise à la lecture de la description qui suit et à l'examen des figures qui l'accompagnent. Celles-ci ne sont données qu'à titre indicatif et nullement limitatif de l'invention. Les figures montrent:

- figure 1: une représentation schématique d'un système d'acquisition d'images numériques bruitées et du traitement qui leur est appliqué selon l'invention;
- figure 2: une représentation symbolique des traitements effectuées selon l'invention pour enlever le bruit;
- figure 3: un perfectionnement de conditionnement préalable des images en vue de leur traitement selon l'invention;
- figure 4: une représentation schématique des difficultés présentées par certains types d'examen ainsi que leur solution;
- figure 5: la fonction de transfert d'un mode de filtrage en apodisation;
- figure 6: un exemple d'application de l'invention dans un type particulier d'examen médical.

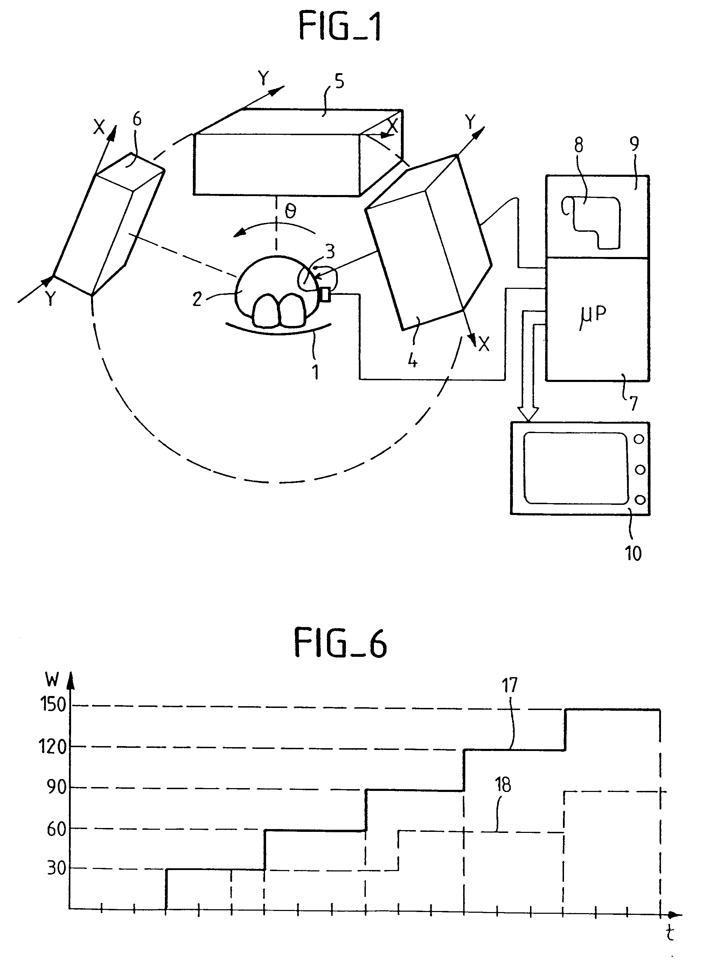

La figure 1 montre une représentation schématique d'un dispositif d'acquisition d'images, malheureusement bruitées, et leur traitement conforme à l'invention. Ce dispositif comporte une couche 1, ou plateau porte-patient, sur lequel est placé un patient 2. Le coeur de ce patient peut être surveillé par un détecteur de synchronisation 3 et être examiné au moyen d'un détecteur 4 d'une gamma caméra (non représentée) placé d'une manière fixe contre le corps du patient en regard du coeur. Le champ du détecteur 4 peut avoir toutes les formes. Il est d'une manière préférée rectangulaire, et capte une image dont tous les pixels peuvent être repérés par rapport à un système d'axes XY , par exemple, parallèles aux bords de ce champ.

Dans un autre type d'examen, une tomographie, le détecteur 4 est déplacé de manière à occuper certaines positions 5 et 6 en nombre suffisant (64 positions pour des tomographies par scintigraphie, jusqu'à 1024 positions pour des tomodensitomètres) réparties sur un demi tour autour du corps du patient 2. A chaque position le détecteur 4 capte une image à deux dimensions. Ces images sont traitées par un processeur de traitement 7 qui met en oeuvre un procédé de traitement, écrit sous forme d'un programme 8 stocké dans une mémoire programme 9.

Les images traitées sont ensuite visualisées sur un moniteur de visualisation 10. Elle peuvent par ailleurs être stockées dans des mémoires de stockage, disque dur ou autres, et même éventuellement être traitées dans d'autre buts: évaluation statistique, discrimination spécifique etc sans comporter de visualisation. Le but de l'invention est de produire des images, éventuellement visibles sur le moniteur 10, qui présentent moins de bruit.

On va s'attacher dans la suite de cet exposé à présenter ce qu'il advient des différents signaux d'images sans se préoccuper par ailleurs de la numérisation de ces signaux d'images ni des traitements numériques ultérieurs. La numérisation est une technique connue. Elle passe par l'utilisation de convertisseurs analogiques numériques pour transformer des signaux analogiques captés par des détecteurs tels que 4 en des signaux numériques. Les traitements ultérieurs des signaux numériques sont par ailleurs connus dans leurs principes et dans leur mise en oeuvre dans le domaine des ordinateurs.

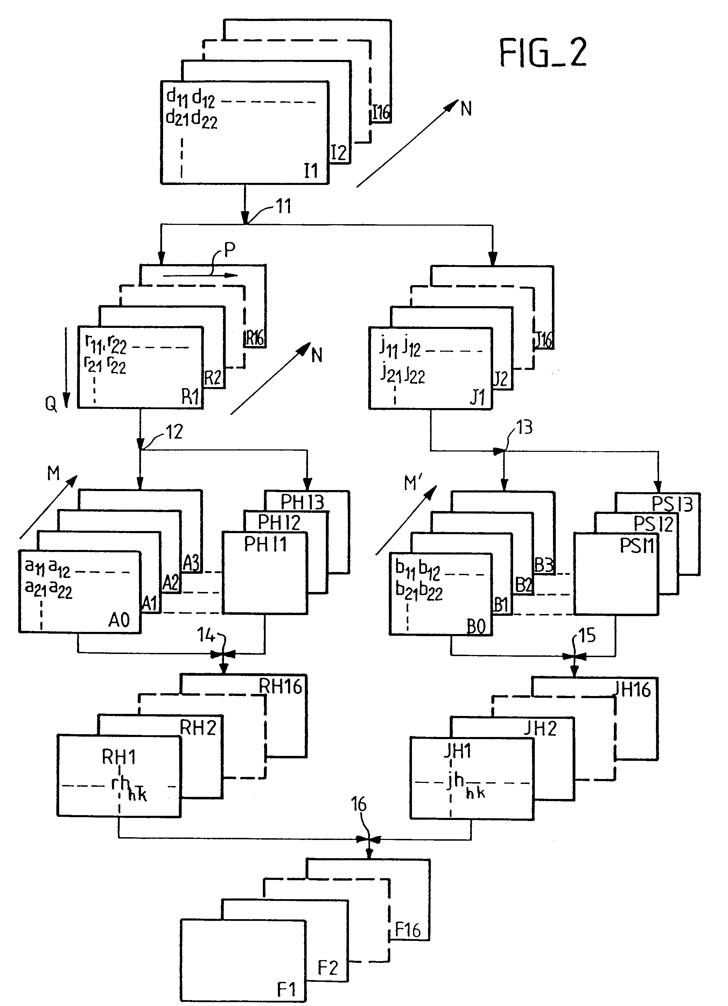

On suppose, dans un exemple qu'on a obtenu, figure 2, seize images dites originelles I1 à I16. Dans le cas où on aurait affaire à une tomographie, on aurait 64 images voire plus dans d'autres modes, en tomodensitométrie ou en tomographie par R M N. Chaque image, par exemple I1, est caractérisée par un nombre de pixels fixant sa résolution, par exemple 64 x 64 pixels. A chaque pixel on peut attribuer une valeur de signal d'image, par exemple $d_{11}$, $d_{12}$, $d_{21}$, $d_{22}$, etc ... en fonction des coordonnées du pixel dans l'image. Cette valeur du pixel peut être directement utilisée pour commander la luminance d'un pixel correspondant du moniteur 10. Dans l'invention on effectue un premier traitement 11 au cours duquel on passe des images originelles I1 à I16 à des transformées analytiques de ces images. Ces transformées analytiques de ces images sont faites images par image, et donnent donc des images transformées. Chaque images transformée contient une partie réelle R et une partie imaginaire J repérée par l'indice de l'image dont elle provient. Dans le cas où la transformée analytique est une transformée de Fourier, le traitement pour obtenir ces images transformée est du type:

FORMULE II

$$r_{hk} = 1/P.Q \; \sum_{i=1}^{i=P} \; \sum_{l=1}^{l=Q} \; d_{il} \cos 2\pi(ih/P + lk/Q)$$

pour la partie réelle et

$$j_{hk} = 1/P.Q \; \sum_{i=1}^{i=P} \; \sum_{l=1}^{l=Q} \; d_{il} \sin 2\pi(ih/P + lk/Q)$$

pour la partie imaginaire.

Dans ces formules h et k sont les indices des éléments d'images dans chacune des images réelles R1 ou imaginaires J1, ou les suivantes. On ne peut plus vraiment parler de pixel s'agissant de ces images puisque ces éléments d'images ne sont pas à priori destinés à être montrés tels quels, encore que cela pourrait également être possible. Les coefficients r ou j calculés indiquent en chacun de ces points les valeurs obtenues par la transformée. Cette transformation consiste à accumuler, sur les résolutions P et Q horizontale et verticale (en général 64 x 64), le produit des coefficients dil des images originelles multiplié par des termes en cosinus ou sinus respectivement correspondant à ce type de transformation.

Pour simplifier on peut choisir une transformée analytique (de Fourier) pour que les éléments d'image résultant d'indice hk soient au même format PQ que les images originelles. Ceci n'est pas une obligation mais cependant un mode préféré si on ne veut pas perdre des informations. Pour simplifier l'explication on a admis qu'on avait N (N = 16 dans le cadre de la surveillance du coeur) images pour surveiller le phénomènes périodique. On a donc également N images transformées à l'issue de la première étape 11. Chaque image transformée comporte un couple d'images.

L'opération suivante de filtrage pourrait être effectuée de diverses façons, mais de préférence dans l'invention, on l'effectue comme indiqué précédemment en filtrant temporellement chacune des composantes réelles et imaginaires des images transformées. Ceci est commencé par deux étapes respectivement 12 et 13 qui peuvent être simultanées. L'étape 12 similaire à l'étape 13, comporte par exemple la recherche, pour chaque collection des N éléments d'images $r_{hk}$ des parties réelles des images transformées, des amplitudes des harmoniques de rang 0 à M-1 ainsi que des phases de ces harmoniques. Il s'agit là de préférence d'une décomposition simple en série de Fourier d'un phénomène périodique encore qu'un autre mode de décomposition est aussi possible. La formule de cette décomposition préférée est la suivante:

FORMULE III

$$c_{hkm} = 1/N \; \sum_{n=1}^{n=N} \; r_{hkn} \; (\cos 2\pi mn/N - j \sin 2\pi mn/N)$$

avec

$j^2 = -1$ et

$c_{hkm} = \alpha_{hkm} + j \, \beta_{hkm}$

Dans cette expression m désigne le rang de l'harmonique, qui peut être limité à M. Le coefficient c comporte donc une partie réelle $\alpha$ et une partie imaginaire $\beta$. Plutôt que de représenter des images de la décomposition en série de Fourier des images transformées sous cette forme, on peut choisir de les représenter sous une forme compatible avec celle représentée dans la formule I. Dans ce cas on peut écrire:

FORMULE IV

$$a_{hkm} = \sqrt{\alpha^2_{hkm} + \beta^2_{hkm}}$$

pour l'amplitude,

et

$$phi_{hkm} = arctg\ \beta_{hkm}/\alpha_{hkm}$$

pour la phase.

De façon analogue, on obtient les coefficients $b_{hkm}$ et $psi_{hkm}$ du développement en série de Fourier des éléments $j_{hkm}$ des images transformées. La décomposition harmonique représentée sur la figure 2 correspond à cette dernière présentation. Dans celle-ci l'ensemble des parties réelles R et imaginaires J des images transformées a été transformé en des images génériques. L'expression des termes de ces images génériques est la suivante:

FORMULE V

$$A(t) = A_0 + A_1\cos(2\pi t/N + Phi_1) + A_2\cos(4\pi t/N + Phi_2) + A_3\cos(6\pi t/N + Phi_3)$$
$$B(t) = B_0 + B_1\cos(2\pi t/N + Psi_1) + B_2\cos(4\pi t/N + Psi_2) + B_3\cos(6\pi t/N + Psi_3)$$

En définitive A(t) et B(t) représentent l'évolution temporelle d'un élément d'image des images transformées, après filtrage.

Le fait que les harmoniques supérieures à trois n'aient pas été retenues a pour conséquence d'effectuer un filtrage temporel des fréquences hautes, en principe plus porteuses de bruit. Ici ce filtrage est appliqué sur une décomposition spatiale des signaux d'images.

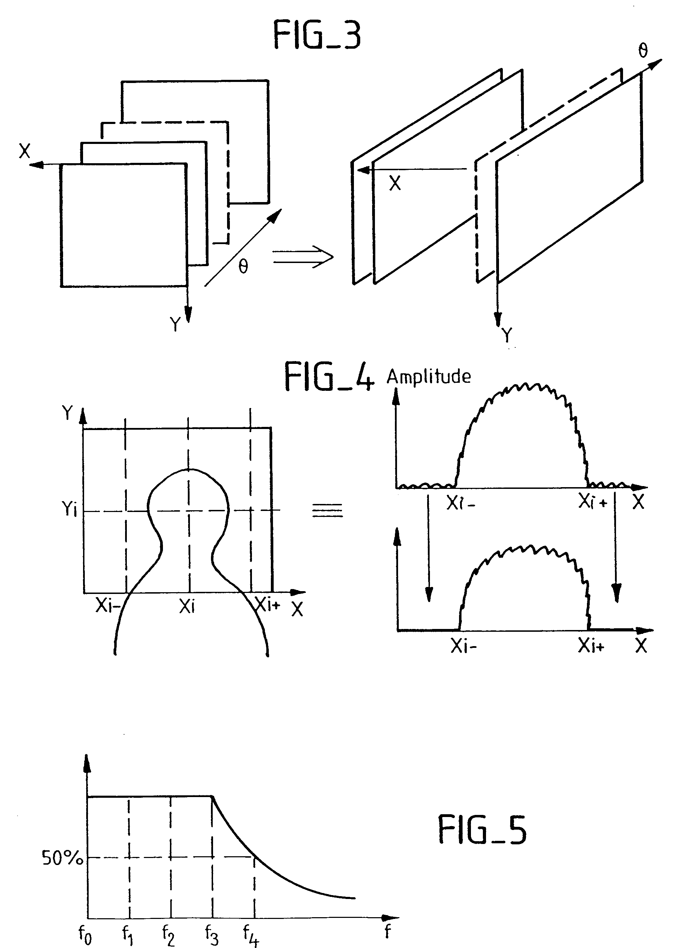

On peut cependant, plutôt que de négliger complètement les harmoniques supérieures à une valeur M donnée, retenir les harmoniques ultérieures, mais avec un coefficient pondérateur cette fois. La figure 5 montre par exemple que pour l'harmonique 4, on peut ne retenir que 50% de la valeur du coefficient $A_4$ ou $B_4$ qu'on aurait calculé naturellement avec la formule III. Cette formule III indique qu'on a choisi pour la partie réelle (A, PHI) et la partie imaginaire (B, PSI) d'en donner une décomposition harmonique avec un même nombre d'harmoniques. Ce nombre est M. Cependant ceci n'est pas nécessaire et on pourrait choisir d'avoir un nombre d'harmoniques M pour les parties réelles différent du nombre d'harmoniques M' pour les parties imaginaires.

Conformément à ce qui a été dit plus haut on retiendra pour M sensiblement la racine carrée de N. Par exemple quand on aura seize images originales, N=16, on choisira, en plus de la composante continue trois harmoniques. Par contre lorsqu'on aura affaire à une tomographie avec 64 images, on pourra choisir 8 ou 10 harmoniques.

Les représentations de la formule V permettent de recalculer en des étapes 14 et 15, des parties réelles filtrées RH, et des parties imaginaires filtrées JH, des images transformées R + jJ. Il suffit pour cela de remplacer dans cette formule t par une valeur comprise entre 0 et N. Eventuellement on peut décider de recomposer plus de N images on choisissant pour t des nombres non entiers. Dans la pratique, compte tenu de ce qu'on a acquis seize images au départ on ne cherchera pas à créer plus que seize images transformées filtrées: des images supplémentaires n'apporteraient aucune information. Autrement dit, avec l'expression de la formule V on peut calculer chacun des coefficients $rh_{hk}$ ainsi que chacun des coefficients $jh_{hk}$ correspondant aux parties réelles et imaginaires des images RH et JH transformées filtrées.

Avec ces images RH et JH on peut, en effectuant en une opération 16 une transformée de Fourier inverse, aboutir à un lot de N (de préférence) images originales filtrées, représentées ici par les images F1 à F16. Cette transformée analytique inverse est de type connu. Si la transformée analytique directe est une transformée de Fourier, comme indiquée dans la formule II, on en déduit aisément une transformée de Fourier inverse de la forme suivante:

FORMULE VI

```
        h=P   k=Q
f_il =  Σ     Σ    (rh_hk (cos 2π(ih/p+lk/q)+j.jh_hk sin 2π(ih/p+lk/q))
        h=1   k=1
```

L'indice n (numéro d'image) n'a pas été affecté explicitement aux coefficients: il est bien entendu que cette formule relie l'image F(n) aux images RH(n) et JH(n).

La figure 3 montre, à gauche, un lot d'images originelles que l'on acquiert lorsque le détecteur de la gamma caméra occupe des positions telles que 4 à 6. Ces positions sont repérées les unes par rapport aux autres par l'angle $\Theta$ d'orientation de la direction principale du détecteur 4 par rapport au corps 2. Cette direction principale peut être déterminée comme la normale au centre du détecteur 4. Il en irait de même en tomodensitométrie. On a donc affaire à des images de champ X,Y repérées par un indice $\Theta$.

L'expérience montre que dans ce cas, si on applique directement le procédé de l'invention, les résultats de l'invention ne sont pas si bons qu'on pourrait l'espérer. On s'est rendu compte alors que, plutôt que d'effectuer les transformées analytiques (de Fourier) à partir des images en champ X Y, il était préférable de réorganiser les données ainsi acquises de manière à obtenir un ensemble de sinogrammes. Ceux-ci sont des simili images, où chaque élément d'image est repéré d'une part par une de ses coordonnées (X ou Y) dans le champ du détecteur, et d'autre part par l'angle $\Theta$ d'orientation des détecteurs au moment de l'acquisition. On montre par ailleurs que les résultats sont nettement améliorés si on choisit des sinogrammes tels que le passage d'un sinogramme à un autre, puis ainsi de suite jusqu'au dernier, s'apparente à un phénomène périodique.

La figure 4 montre, pour une orientation $\Theta$ donnée, l'image obtenue de la tête d'un patient dans le champ XY du détecteur. La direction Y est la direction allant des pieds à la tête du patient. Si on construit des sinogrammes de type Y$\Theta$ (figure 3), ceci revient à ne prendre pour chacun d'eux que les signaux d'images situés à une abscisse $X_l$. On voit, lorsque cette abscisse $X_l$ passe de la gauche à la droite de la tête du patient, que du fait de la symétrie (approximative) de cette tête du patient, on va retrouver pour les abscisses supérieures $X_{i+}$ sensiblement un même type d'images que celui que l'on avait rencontré pour les sinogrammes précédents d'abscisse $X_{l-}$. Cette périodicité reconstitue alors l'équivalent de la périodicité rencontrée préalablement pour le cycle cardiaque.

Le procédé de l'invention préconise donc dans ce cas une opération préalable consistant à transformer le lot des images en X et Y repérées par $\Theta$, en des images, qui seront alors dites originelles au sens de l'invention, en Y et $\Theta$ repérées par X. Le type de réarrangement à mettre en oeuvre est très simple, il suffit d'intervertir dans les adresses des points d'images intervenant dans les calculs, les coordonnées $\Theta$ et X.

S'agissant de tomographie où on effectue 64 projections ($\Theta$ varie entre $\pi/64$ et $\pi$) et où les images sont résolues en 64 points par 64 points, ce type de transformation est très simple. Le reste du traitement nécessite juste d'être adapté pour tenir compte de cette modification. On peut remarquer cependant que 64 images, en application du théorème de Shannon, ne peuvent donner, dans les images transformées au maximum que 32 harmoniques. Comme on n'en garde que 8 à 10 comme vu précédemment on ne crée pas d'artefact.

Sur la figure 4 on a par ailleurs représenté un signal d'images tel qu'il apparaît en amplitude à une ordonnée $Y_i$. L'amplitude de ce signal est bruitée: son tracé n'est pas régulier. On s'est rendu compte qu'on pouvait par ailleurs fortement améliorer la qualité de l'image visualisée si, en dehors de la partie utile, celle limitée par les abscisses $X_{i-}$ et $X_{i+}$ on forçait la valeur du signal d'image à zéro sans tenir compte de la valeur effectivement mesurée par le détecteur à cet endroit. On peut alors montrer uné amélioration significative supplémentaire de la qualité des images.

La figure 6 montre un exemple particulier d'utilisation du procédé de l'invention. Il existe, en particulier dans le domaine de la scintigraphie, un examen des cavités cardiaques, dit Gated Blood Pool, GBP, consistant à surveiller le coeur d'un patient alors qu'il est installé dans une machine à pédales, et qu'il peut fournir une certaine puissance de travail. L'expérience consiste à appliquer une résistance au pédalage de façon à fatiguer progressivement le patient et à regarder l'évolution correspondante de son coeur.

Ce type d'expérience comporte par exemple 6 étapes au cours desquels la puissance développée par le patient suit une fonction en escalier de 30 watts en 30 watts. Chaque étape de cette expérience dure le temps suffisant pour qu'une image non bruitée puisse être acquise. Au début de chaque étape on injecte une dose de marqueur radioactif dans le sang du patient. Au moment de cette injection, commençant avec le réglage d'une résistance au pédalage à une autre valeur, il apparaît que les mesures effectuées pendant les deux premières minutes ne sont pas significatives ni utilisables. Compte tenu des bruits mesurés dans chaque images, pour chaque étape, il faut normalement une durée d'acquisition de l'ordre de trois minutes à chaque fois. Ceci conduit à une durée totale d'expérience de 6 x (2 + 3) 30 minutes.

Avec le procédé de l'invention, compte tenu de la réduction significative des bruits, il suffit d'une minute utile à chaque étape. Ceci conduit donc à une durée totale d'expérience égale à 18 minutes (6 x (2+1) minutes). Le diagramme de la figure 6 montre en traits pleins 17 la durée réelle avec le procédé de l'invention, et en traits pointillés 18 la durée ancienne. On gagne en temps d'utilisation de la machine en même temps que l'examen devient moins pénible pour le patient.

En outre, à côté de ce type d'examen dit GBP d'effort il existe un autre examen de type GBP normal dans lequel le patient ne pédale pas. Avec le dispositif de l'invention il est possible d'acquérir une image relative à cet examen GBP normal comme représentatif de la première étape de l'expérimentation avec effort.

Par ailleurs il existe un examen dit de premier passage synchronisé dans lequel, plutôt que de s'intéresser à la fixation du Thallium, ou d'un autre traceur, dans les parois du coeur on s'intéresse au passage du Thallium, ou d'un autre traceur, dans le coeur lui-même. Ceci ne peut être effectué que pendant les cinq ou six premiers battements cardiaques qui suivent l'injection. Autrement dit on ne dispose que de 5 ou 6 secondes d'accumulation possible des images pendant lesquelles le traceur est dans les cavités cardiaques. Après l'image est plutôt une image de paroi (Thallium fixé dans les parois) et non plus une image de passage de sang dans le coeur. Auparavant ce type d'images était quasiment inexploitable parce que trop bruité. Ou bien tout simplement le nombre de décompositions d'étapes du cycle cardiaque ne pouvait pas être égal à seize et on avait à supporter le bougé du coeur pendant des étapes trop longues. Avec l'invention, en se limitant au sept premières secondes d'acquisition, on peut néanmoins accumuler sept valeurs en chacun des pixels des seize images décomposant le mouvement du coeur. Le résultat est alors exploitable. On peut plus facilement voir des affections dont souffre le patient.

Dans un autre type d'expérimentation on effectue des tomographie synchronisées de manière à acquérir une image en trois dimensions du coeur. Dans ce cas, pour simplifier l'explication, on peut considérer qu'on effectue 64 poses pour obtenir des images résolues en 64 points par 64 points, et que le résultat va être décomposé en 16 jeux de tomographies à trois dimensions relatifs chacun à un instant repéré par rapport au début du cycle cardiaque. On aura donc affaire à un lot d'images où N est le produit du nombre d'orientation (par exemple 64) par le nombre d'étapes du cycle cardiaque (par exemple 16). Dans ce cas pour faire le filtrage, on peut soit choisir de faire des faux sinogrammes comme représenté à la figure 3 ou, plus simplement, de faire un filtrage temporel direct comme expliqué au début en combinant, pour chaque orientation du détecteur, les images transformées décomposées selon les harmoniques de la pulsation cardiaque. En définitive on a dans ce cas 64 fois la mise en oeuvre de l'algorithme de la figure 2.

Par ailleurs, on a noté que les calculs effectués numériquement conduisaient à des troncatures (qui éliminent les bits de poids faibles). Ces troncatures exercent un effet de filtrage supplémentaire favorable. Les valeurs très petites sont en effet mises à zéro par la troncature.

## Revendications

**1 -** Procédé de traitement des images d'un lot originel de N images (I) à au moins deux dimensions, pour en enlever le bruit, les N images de ce lot représentant N états d'un phénomène périodique, caractérisé en ce qu'il comporte les étapes suivantes:
- on effectue (11) une transformée analytique bidimensionnelle des images du lot originel pour obtenir un lot de N images transformées, chaque image transformée comportant une partie réelle (R) et une partie imaginaire (J),
- on filtre les N images transformées en composant chaque point d'image de ces images transformées avec des mêmes points d'image dans les autres images transformées afin d'obtenir un lot d'images transformées filtrées, et
- on effectue une transformée analytique bidimensionnelle inverse des images du lot d'images transformées filtrées pour obtenir un lot de N images originelles filtrées.

**2 -** Procédé selon la revendication 1, caractérisé en ce que pour filtrer
- on effectue, pour chaque collection de N points de mêmes coordonnées dans ces N parties réelles du lot des N images transformées, des décompositions harmoniques, limitées à l'harmonique M d'une évolution périodique des images dans le lot originel d'images,
- on effectue, pour chaque collection de N points de mêmes coordonnées dans ces N parties imaginaires du lot des N images transformées, des décompositions harmoniques, limitées à l'harmonique M' d'une évolution périodique des images dans le lot originel d'images,
- on obtient ainsi pour chaque collection de N points 2M+1 composantes d'image,
- on effectue T recompositions harmoniques en combinant T fois avec des valeurs différentes des pondérations de ces 2M+1 composantes.

**3 -** Procédé selon la revendication 2, caractérisé en ce que T=N et/ou M=M'.

**4 -** Procédé selon l'une des revendications 2 à 3, caractérisé en ce que M est sensiblement égal à la racine carrée de N.

**5 -** Procédé selon l'une des revendications 2 à 4, caractérisé en ce que dans la recombinaison on réalise une apodisation.

**6 -** Procédé selon l'une des revendications 1 à 5, caractérisé en ce qu'on obtient le lot des images originelles (X,Θ,Y) en composant des sinogrammes d'un autre lot d'images (X,Y,Θ).

**7 -** Procédé selon l'une des revendications 1 à 6, caractérisé en ce que, chaque image du lot originel d'images contenant une partie en amas utile, et une partie inutile environnant cette partie utile, on annule un signal d'image pour les points d'image situés dans cette partie inutile.

**8 -** Procédé selon l'une des revendications 1 à 7, caractérisé en ce que la transformée analytique est une transformée de Fourier à deux dimensions.

**9 -** Procédé selon l'une des revendications 1 à 8, caractérisé en ce que les transformations et le filtrage sont effectués numériquement pour apporter un effet de filtrage supplémentaire, dû aux troncatures de la numérisation.

# FIG_1

# FIG_6

FIG_2

# FIG_3

# FIG_4

Amplitude

# FIG_5

EP 0 604 291 A1

Office européen
des brevets

**RAPPORT DE RECHERCHE EUROPEENNE**

Numero de la demande

EP 93 40 3094

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| X | PHYS. MED. BIOL. Janvier 1990 pages 1 - 9 VALETTE ET AL. 'filters and fourier analysis of gated blood pool studies' * page 7, ligne 15 - ligne 17 * * page 8, ligne 1 - ligne 7 * | 1-9 | G06F15/68 |
| X | IEEE TRANSACTIONS ON CIRCUITS AND SYSTEMS vol. 37, no. 2 , Février 1990 , NEW YORK US pages 223 - 231 CHOUDHURY A. ET AL. 'Multidimensional filtering using combined discrete Fourier transform and linear difference equation methods' * abrégé * * page 223, colonne de gauche, ligne 1 - ligne 16 * | 1-9 | |
| X | IEEE TRANS. BIOMED. ENG. vol. 24, no. 4 , Juillet 1977 pages 337 - 347 VAROUTAS P. ET AL. 'Digital image processing  applied to scintillation images from biomedical systems' | 1 | **DOMAINES TECHNIQUES RECHERCHES (Int.Cl.5)**<br><br>G06F |
| A | * page 340, colonne de droite, ligne 33 - page 341, colonne de gauche, ligne 6; figure 3 * | 2-9 | |
| A | COMP. APPLICATIONS IN RADIOLOGY 23 Septembre 1970 , COLUMBIA, MO, USA pages 561 - 579 BROWN D. ET AL. 'Computer and optical processing of radioisotope scans using Fourier and other transforms' * page 563, ligne 14 - ligne 27 * * page 568, ligne 1 - ligne 11 * | 5 | |

-/--

Le présent rapport a été établi pour toutes les revendications

| Lieu de la recherche | Date d'achèvement de la recherche | Examinateur |
|---|---|---|
| LA HAYE | 8 Février 1994 | Pierfederici, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

13

Office européen
des brevets

**RAPPORT DE RECHERCHE EUROPEENNE**

Numero de la demande

EP 93 40 3094

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| A | US-A-4 335 427 (HUNT ET AL.) 15 Juillet 1982<br>* colonne 1, ligne 41 - ligne 44 *<br>----- | 7 | |
| | | | **DOMAINES TECHNIQUES RECHERCHES (Int.Cl.5)** |

Le présent rapport a été établi pour toutes les revendications

| Lieu de la recherche | Date d'achèvement de la recherche | Examinateur |
|---|---|---|
| LA HAYE | 8 Février 1994 | Pierfederici, A |